# EUROPEAN PATENT APPLICATION

(11) **EP 3 324 526 A1**
(43) Date of publication of application: **23.05.2018**
(21) Application number: 17200853.4
(22) Date of filing: 09.11.2017
(51) Int. Cl.: H02K 41/03

(54) **MAGNETIC FIELD GENERATING MEMBER AND MOTOR INCLUDING SAME**

(30) Priority: 21.11.2016 JP 2016225992
(71) Applicant: Panasonic Intellectual Property Management Co., Ltd., Osaka-shi, Osaka 540-6207 (JP)
(72) Inventor: HASHIMOTO, Toshiharu, Osaka-shi,, Osaka 540-6207 (JP); ASAI, Yasuyoshi, Osaka-shi., Osaka 540-6207 (JP); OTA, Tomohiro, Osaka-shi,, Osaka 540-6207 (JP)
(74) Representative: Grünecker Patent- und Rechtsanwälte PartG mbB

(57) **Abstract**

There is provided magnetic field generating member (20) including: permanent magnet portion (220) that has first magnetic pole portion (221) of which one surface side becomes a first magnetic pole surface and second magnetic pole portion (222) which is adjacent to first magnetic pole portion (221) and of which one surface side becomes a second magnetic pole surface. In addition, the magnetic field generating member includes first magnetic body (230) disposed on one surface side in at least one of first magnetic pole portion (221) and second magnetic pole portion (222) and second magnetic body (240) disposed on the other surface side of permanent magnet portion (220) so as to straddle boundary between first magnetic pole portion (221) and second magnetic pole portion (222).

## Description

### BACKGROUND

### 1. Technical Field

The disclosure relates to a magnetic field generating member and a motor including the magnetic field generating member.

### 2. Description of the Related Art

In the related art, as a magnetic field generating member, there are known a permanent magnet having a Halbach array structure which includes a main magnetic pole permanent magnet magnetized in a direction of a generating magnetic field and a sub magnetic pole permanent magnet magnetized in a direction different from the direction of the main magnetic pole permanent magnet (See, for example, PTL 1 (Japanese Patent Unexamined Publication No. 2007-006545)).

In PTL 1, the generating magnetic field is increased by replacing a portion of a magnetic field generating side of the main magnetic pole permanent magnet with a magnetic body having a relatively high saturation magnetic flux density.

However, there is a problem that it is difficult to simplify the structure since there is a need to bond a plurality of permanent magnets in the permanent magnet having the Halbach array structure as in the technique of the related art described above.

### SUMMARY

An object of the disclosure is to provide a magnetic field generating member that can further simplify a configuration thereof and increase generating magnetic field and a motor including the magnetic field generating member.

The magnetic field generating member of the disclosure includes a permanent magnet portion that has a first magnetic pole portion of which one surface side becomes a first magnetic pole surface and a second magnetic pole portion which is adjacent to the first magnetic pole portion and of which the one surface side becomes a second magnetic pole surface. In addition, the magnetic field generating member includes a first magnetic body disposed on one surface side in at least one of the first magnetic pole portion and the second magnetic pole portion and a second magnetic body disposed on the other surface side of the permanent magnet portion so as to straddle boundary between the first magnetic pole portion and the second magnetic pole portion.

With such a configuration, saturation magnetic flux density at the magnetic pole portion can be improved by the first magnetic body and the generating magnetic field can be increased. Furthermore, the saturation magnetic flux density at a portion where the magnetic flux saturation tends to be limited by magnetic saturation can be increased by disposing the second magnetic body in the portion and the generating magnetic field can be further increased.

In addition, since the magnetic field generating member can be formed with a small number of components as compared with the permanent magnets having a Halbach array structure, it is also possible to simplify the configuration thereof.

In addition, the motor of the disclosure has the magnetic field generating member described above and an electromagnetic force generating member which has a coil for generating a magnetic field by energization and is disposed to face the magnetic field generating member with a gap therebetween on one surface side of the magnetic field generating member. One of the magnetic field generating member and the electromagnetic force generating member used as a mover and the other member thereof is used as a stator.

Accordingly, thrust and torque of the motor can be increased.

According to the disclosure, it is possible to obtain a magnetic field generating member that has a simpler configuration and can increase the generating magnetic field and a motor including the magnetic field generating member.

### BRIEF DESCRIPTION OF THE DRAWINGS

FIG. 1 is a sectional view schematically illustrating a motor according to a first embodiment of the present disclosure;
FIG. 2A is a view illustrating a modification example of a magnetic field generating member used in the motor according to the first embodiment of the disclosure and is a sectional view illustrating a first modification example of the magnetic field generating member;
FIG. 2B is a sectional view illustrating a second modification example of the magnetic field generating member in the first embodiment of the disclosure;
FIG. 2C is a sectional view illustrating a third modification example of the magnetic field generating member in the first embodiment of the disclosure;
FIG. 3 is a sectional view illustrating a fourth modification example of the magnetic field generating member used in the motor according to the first embodiment of the disclosure;
FIG. 4 is a sectional view schematically illustrating a motor using a magnetic field generating member according to a fifth modification example of the disclosure;
FIG. 5A is a sectional view illustrating a sixth modification example of the magnetic field generating member used in the motor according to the first embodiment of the disclosure;
FIG. 5B is a sectional view illustrating a seventh modification example of the magnetic field generating member according to the first embodiment of the disclosure;
FIG. 5C is a sectional view illustrating an eighth modification example of the magnetic field generating member according to the first embodiment of the disclosure; and
FIG. 6 is a view comparing magnetic flux density of the magnetic field generating member to which the disclosure is applied and the magnetic flux density of the magnetic field generating member of the related art.

### DETAILED DESCRIPTION

An example of aspect in which disclosure can be taken

According to a first aspect of the present embodiment, there is provided a magnetic field generating member including: a permanent magnet portion that has a first magnetic pole portion of which one surface side becomes a first magnetic pole surface and a second magnetic pole portion which is adjacent to the first magnetic pole portion and of which the one surface side becomes a second magnetic pole surface. In addition, the magnetic field generating member includes a first magnetic body disposed on the one surface side in at least one of the first magnetic pole portion and the second magnetic pole portion and a second magnetic body disposed on the other surface side of the permanent magnet portion so as to straddle boundary between the first magnetic pole portion and the second magnetic pole portion.

With such a configuration, saturation magnetic flux density at the magnetic pole portion can be improved by the first magnetic body and the generating magnetic field can be increased. Furthermore, saturation magnetic flux density can be increased in a certain portion where the generating magnetic flux tends to be limited by magnetic saturation by disposing the second magnetic body at the portion and the generating magnetic field can be further increased.

In addition, since the magnetic field generating member can be formed with a small number of components as compared with the permanent magnets having a Halbach array structure, it is also possible to simplify the configuration thereof.

Accordingly, according to the embodiment of the disclosure, it is possible to obtain a magnetic field generating member that has a simpler configuration and can increase the generating magnetic field and a motor including the magnetic field generating member.

In addition, in the first aspect, a second aspect of the disclosure may be configured so that an exposed surface from which the first magnetic body is exposed is formed on at least a portion of the one surface side of the magnetic pole portion on which the first magnetic body is disposed.

Accordingly, if at least a portion of the first magnetic body is exposed on one surface side of the permanent magnet portion, the saturation magnetic flux density at the magnetic pole portion can be further improved and the generating magnetic field can be further increased.

In addition, in the first aspect or the second aspect, a third aspect of the disclosure may be configured so that the permanent magnet portion has a permanent magnet subjected to polar anisotropic magnetization.

With such a configuration, a more optimal magnetization can be obtained as a permanent magnet and the generating magnetic flux of the magnetic field generating member can be further increased. Furthermore, since the number of permanent magnets constituting the permanent magnet portion can be smaller than that of the permanent magnet in the Halbach array structure, the productivity can be improved and the dimensional accuracy can be improved.

In addition, in any one of the first aspect to the third aspect, a fourth aspect of the disclosure may be configured so that the permanent magnet portion has a permanent magnet subjected to isotropic magnetization in a direction facing the one surface and the other surface.

Accordingly, permanent magnets subjected to the isotropic magnetization can be manufactured relatively easily. For example, although rare-earth sintered magnet is generally difficult to perform polar-anisotropic magnetization, even in such rare-earth sintered magnet, it is relatively easy to perform the isotropic magnetization. Therefore, the magnetic field generating member which can increase the generating magnetic field can be more easily manufactured. In other words, even if a permanent magnet that can be manufactured relatively easily is used, the generating magnetic field can be increased. Furthermore, the number of permanent magnets constituting the permanent magnet portion can be smaller than that of the permanent magnet in the Halbach array structure. Therefore, productivity can be improved and dimensional accuracy can be improved.

In addition, in any one of the first aspect to the fourth aspect, a fifth aspect of the disclosure may be configured so that the permanent magnet portion is configured by one permanent magnet.

With such a configuration, since there is no need to bond a plurality of permanent magnets, the productivity can be further improved. In addition, since errors caused by bonding a plurality of permanent magnets can be eliminated, the dimensional accuracy can be further improved.

In addition, in any one of the first aspect to the fifth aspect, in a sixth aspect of the disclosure, a reinforcing member may be disposed on the other surface side of the permanent magnet portion.

With such a configuration, strength as a magnetic field generating member can be further improved.

In addition, in the sixth aspect, a seventh aspect of the disclosure may be configured so that the reinforcing member has a soft magnetic portion formed of a soft magnetic material.

With such a configuration, the generation of magnetic saturation on the other surface side of the magnetic field generating member can be further suppressed and the generating magnetic field can be further increased.

In addition, in any one of the first aspect to the seventh aspect, an eighth aspect of the disclosure may have a plurality of second magnetic bodies and the plurality of second magnetic bodies may include the second magnetic body on which an extended portion extending toward the one surface side is formed.

With such a configuration, since a magnetic path is formed between the second magnetic body on which the extended portion is formed and the one surface side of the permanent magnet portion, magnetic resistance can be reduced. As a result, the generating magnetic field can be further increased.

In addition, in the eighth aspect, a ninth aspect of the disclosure may be configured so that the extended portion extends to one surface side.

With such a configuration, since the magnetic resistance can be further reduced by the magnetic path formed between the second magnetic body and the one surface side of the permanent magnet portion, the generating magnetic field can be further increased.

In addition, in any one of the first aspect to the ninth aspect, a tenth aspect of the disclosure may be configured so that at least one magnetic pole portion in the permanent magnet portion has a surface curved toward the other surface side.

With such a configuration, since the surface area of the portion where the magnetic flux of the permanent magnet portion is generated can be increased, the generating magnetic field can be further increased.

In addition, in any one of the first aspect to the tenth aspect, in an eleventh aspect of the disclosure, a terminal end portion may be formed on an end portion of the permanent magnet portion in a direction in which the first magnetic pole portion and the second magnetic pole portion are arranged in parallel. The first magnetic body disposed at the terminal end portion may be configured so as not to be exposed on the one surface side.

Accordingly, since the leakage magnetic flux at the terminal end portion of the magnetic field generating member can be reduced, the generating magnetic field can be further increased.

In addition, according to a twelfth aspect of the disclosure, there is provided a motor including: the magnetic field generating member described in any one of the first aspect to the eleventh aspect, and an electromagnetic force generating member that has a coil for generating a magnetic field by energization and is disposed on one surface side of the magnetic field generating member to face the magnetic field generating member with a gap therebetween.

One of the magnetic field generating member and the electromagnetic force generating member is used as a mover and the other member thereof is used as a stator.

With such a configuration, the thrust and torque of the motor can be increased.

Hereinafter, the embodiment of the disclosure will be described with reference to the drawings. The disclosure is not limited to the embodiment.

In addition, in the following description, as the magnetic field generating member, a linear magnetic field generating member (elongated in one direction, substantially rectangular magnetic field generating member) in which an end portion in a direction in which the first magnetic pole portion and the second magnetic pole portion are arranged in parallel becomes the terminal end portion is described as an example. In addition, as a motor, a motor in which the linear magnetic field generating member is used as a mover and which has a coil for generating a magnetic field by energization and includes an electromagnetic force generating member disposed on one surface side of the magnetic field generating member to face the one surface side thereof with a gap therebetween is described as an example. In addition, as a motor, a linear motor in which the electromagnetic force generating member is used as a stator and the magnetic field generating member and which is a mover is relatively reciprocated with respect to the stator is described as an example.

### First Embodiment

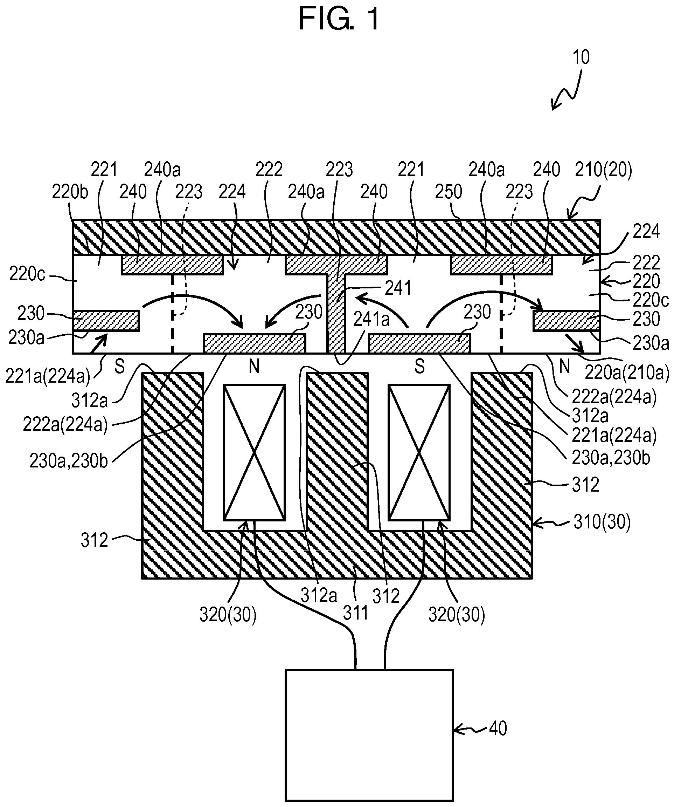

As illustrated in FIG. 1, linear motor (motor) 10 according to a first embodiment has magnetic field generating member 20 and electromagnetic force generating member 30. In addition, in linear motor 10, magnetic field generating member 20 is used as a mover, and electromagnetic force generating member 30 is used as a stator.

Magnetic field generating member 20 as a mover has main body portion 210 which is elongated in one direction (left and right direction in FIG. 1) and has a substantially rectangular body (including rectangular body). Electromagnetic force generating member 30 is disposed with a predetermined gap from main body portion 210 so as to face lower surface 210a (one surface) of main body portion 210. Accordingly, in the first embodiment, lower surface 210a of main body portion 210 becomes the opposing surface of the mover facing electromagnetic force generating member 30.

In addition, as illustrated in FIG. 1, main body portion 210 has permanent magnet portion 220, first magnetic body 230, second magnetic body 240, and reinforcing member 250.

Permanent magnet portion 220 has lower surface 220a (one surface) side which becomes a magnetic pole surface and is configured so that a magnetic field is generated mainly in a direction normal to lower surface 220a.

In the first embodiment, permanent magnet portion 220 is formed by two permanent magnets 224 and 224 subject to polar anisotropic magnetization so that a magnetic pole surface having a different polarity of the N pole surface and the S pole surface is formed on lower surface 224a (one surface) being arranged in parallel. In other words, permanent magnet portion 220 according to the first embodiment has two (at least one) permanent magnets 224 subject to polar anisotropic magnetization.

Two permanent magnets 224 and 224 are disposed so that a direction in which two permanent magnets 224 and 224 are arranged in parallel and the parallel direction of the magnetic pole surfaces having different polarities of respective permanent magnets 224 coincide with each other. Furthermore, two permanent magnets 224 and 224 are arranged in parallel so that the magnetic pole surfaces having different polarities are adjacent to each other. In other words, two permanent magnets 224 and 224 are arranged in parallel in a state where the N pole surface side of the other permanent magnet 224 is positioned adjacent to the S pole side of one permanent magnet 224.

With such a configuration, the S pole surface, the N pole surface, the S pole surface, and the N pole surface are alternately formed on lower surface 220a of permanent magnet portion 220 in this order from one side (left side in FIG. 1) in one direction (length direction: left and right direction in FIG. 1).

Accordingly, in the first embodiment, permanent magnet portion 220 includes two (at least one) first magnetic pole portion 221 of which lower surface 221a (one surface) becomes an S pole surface (first magnetic pole surface) and two (at least one) second magnetic pole portion 222 which is adjacent to first magnetic pole portion 221 and of which lower surface 222a (one surface) becomes an N pole surface (second magnetic pole surface). First magnetic pole portion 221, second magnetic pole portion 222, first magnetic pole portion 221, and second magnetic pole portion 222 are configured to be alternately formed in this order from one side (left side in FIG. 1) in one direction (length direction: left and right direction of FIG. 1).

On the other hand, electromagnetic force generating member 30 as a stator has stator core 310 and coil 320 wound around stator core 310 to generate a magnetic field by energization.

Stator core 310 includes stator core main body 311 having a substantially flat plate shape (including a flat plate shape) and protruding pole 312 protruding from stator core body 311 toward lower surface 210a side of magnetic field generating member 20.

In the first embodiment, three protruding poles 312 are arranged in parallel so as to protrude toward magnetic field generating member 20 side from both end portions and a central portion of stator core main body 311, respectively. Stator core 310 has a substantially E-shape (including an E-shape) in a sectional view. Upper-end surface 312a of each protruding pole 312 faces lower surface 210a (one surface) of main body portion 210 of magnetic field generating member 20.

Stator cores 310 can be formed, for example, by stacking a plurality of core members made of magnetic metal such as electromagnetic steel sheets. It is also possible to form stator cores 310 by compression molding the magnetic metal powder or to form stator cores 310 by cutting the magnetic metal block.

Coil 320 is wound around protruding pole 312 which is positioned at center and coil 320 is electrically connected to drive circuit 40. It is preferable that coil 320 is wound around protruding pole 312 via the insulating member.

In linear motor 10 (motor) having such a configuration, when the alternating current for driving is supplied from drive circuit 40 to coil 320 wound around central protruding pole 312 (alternating current is energized to coil 320) the polarity of upper-end surface 312a of protruding pole 312 positioned at the center periodically changes during supply of the alternating current. In this time, the polarity of upper-end surface 312a of protruding pole 312 on both sides changes periodically in a phase opposite to change in the polarity of upper-end surface 312a of central protruding pole 312. An alternating magnetic field is generated at upper-end surface 312a of each protruding pole 312 in response to a change in the polarity of upper-end surface 312a of each protruding pole 312 and the alternating magnetic field acts from upper-end surface 312a of each protruding pole 312 to magnetic field generating member 20.

Magnetic field generating member 20 is combined with electromagnetic force generating member 30 to constitute a magnetic circuit and magnetic field generating member 20 is reciprocated with respect to electromagnetic force generating member 30 by the thrust generated by the alternating magnetic field generated by electromagnetic force generating member 30.

The magnitude of the thrust for reciprocating magnetic field generating member 20 is proportional to the magnetic flux amount of the magnetic circuit configured between magnetic field generating member 20 and electromagnetic force generating member 30.

Therefore, it is preferable to increase the magnetic flux amount of the magnetic circuit configured between magnetic field generating member 20 and electromagnetic force generating member 30.

It is first necessary to increase the generating magnetic flux from magnetic field generating member 20 so as to increase the magnetic flux amount of the magnetic circuit configured between magnetic field generating member 20 and electromagnetic force generating member 30. Furthermore, it is necessary to reduce the leakage magnetic flux, which is the magnetic flux returning to magnetic field generating member 20 without passing through electromagnetic force generating member 30, in the magnetic flux generated in magnetic field generating member 20.

Here, in the first embodiment, by making permanent magnet 224 by the polar anisotropic magnetization, it is possible to eliminate a useless flow of the magnetic flux as much as possible and to form a further ideal magnetic path. Therefore, it is possible to increase the magnetic field (generating magnetic flux of magnetic field generating member 20) generated by magnetic field generating member 20 even by using such a magnetic field generating member 20.

In the first embodiment, the magnetic field generated by magnetic field generating member 20 can be further increased.

Specifically, first magnetic body 230 is disposed on the lower surface (magnetic pole surface and surface facing the stator) side of at least one of first magnetic pole portion 221 and second magnetic pole portion 222.

In addition, in the first embodiment, one first magnetic body 230 is disposed on each of the four magnetic pole portions (two first magnetic pole portions 221 and two second magnetic pole portions 222).

Furthermore, at least a portion of the magnetic pole surface of the magnetic pole portion where first magnetic body 230 is disposed is configured to be exposed surface 230b exposed from first magnetic body 230.

Specifically, in the magnetic pole portions (first magnetic pole portion 221 on inside and second magnetic pole portion 222 on inside) positioned at the center in the left and right direction in FIG. 1, first magnetic body 230 is disposed in each magnetic pole portion in a state where lower surface 230a is exposed so as to be flush (formed on the same surface) with the magnetic pole surfaces (lower surface 221a (first magnetic pole surface) and lower surface 222a (second curved surface)) of each magnetic pole portion.

In other words, in the first embodiment, in the magnetic pole portions positioned at the center (first magnetic pole portion 221 on inside and second magnetic pole portion 222 on inside), a portion of the magnetic pole surfaces (lower surface 221a (first magnetic pole surface) and lower surface 222a (second magnetic pole surface)) of each magnetic pole portion becomes lower surface 230a (exposed surface 230b) of first magnetic body 230.

In permanent magnet portion 220 of magnetic field generating member 20 according to the first embodiment, both end portions in a direction in which first magnetic pole portion 221 and second magnetic pole portion 222 are arranged in parallel (left and right direction in FIG. 1) are terminal end portions 220c, respectively. In other words, terminal end portions 220c of permanent magnet portions 220 are formed respectively in the magnetic pole portions (first magnetic pole portion 221 on outside and second magnetic pole portion 222 on outside) positioned at both ends in the left-right direction in FIG. 1.

In the first embodiment, with respect to the magnetic pole portions (first magnetic pole portion 221 on outside and second magnetic pole portion 222 on outside) positioned at both ends in the left-right direction in FIG. 1, disposed first magnetic body 230 is configured to be exposed to the magnetic pole surface (lower surface 221a (first magnetic pole surface) and lower surface 222a (second magnetic pole surface)) sides of each magnetic pole portion. In other words, first magnetic body 230 is disposed on each magnetic pole portion (magnetic pole portion on which terminal end portion 220c is formed) so as to be in a state where lower surface 230a of first magnetic body 230 is positioned above the lower surfaces (lower surface 221a and lower surface 222a) of each magnetic pole portion.

Therefore, in the magnetic pole portions (first magnetic pole portion 221 on outside and second magnetic pole portion 222 on outside) positioned at both ends in the left-right direction in FIG. 1, lower surface 230a of first magnetic body 230 is completely covered by the lower surfaces (lower surface 221a and lower surface 222a) of each magnetic pole portion. As illustrated in FIG. 1, first magnetic body 230 which is disposed on the magnetic pole portion on the outside (magnetic pole portion on which terminal end portion 220c is formed) is disposed on each magnetic pole portion in a state of being exposed to the outside in the left and right direction.

Lower surface 230a of first magnetic body 230 disposed at terminal portion 220c of permanent magnet portion 220 may be configured to be exposed to the magnetic pole surfaces (lower surface 221a (first magnetic pole surface) and lower surface 222a (second magnetic pole surface)) sides of each magnetic pole portion). Accordingly, since the shape of permanent magnet 224 can be further simplified, the effect of making permanent magnet 224 easier to manufacture can be obtained.

Accordingly, since first magnetic body 230 is disposed on permanent magnet portion 220, the generation of magnetic saturation on the magnetic pole surface (lower surface 220a) side of permanent magnet portion 220 can be suppressed by first magnetic body 230. As a result, the magnetic field generated by magnetic field generating member 20 (generating magnetic flux of magnetic field generating member) can be further increased.

In this time, if a plurality of magnetic pole portions in which first magnetic body 230 is disposed are configured so that the magnetic pole portions having exposed surfaces 230b from which first magnetic body 230 is exposed are included in at least a portion of the magnetic pole surfaces, the generation of magnetic saturation on the magnetic pole surface (lower surface 220a) side of permanent magnet portion 220 can be further suppressed.

Furthermore, if two first magnetic bodies 230 disposed at terminal portion 220c of permanent magnet portion 220 are disposed inside permanent magnet 224 (upper side of lower surface 224a), permanent magnet 224 for generating a magnetic flux in a direction facing electromagnetic force generating member 30 is configured to be provided on the surface side facing electromagnetic force generating member 30. Therefore, it is possible to reduce the leakage magnetic flux returning to magnetic field generating member (mover) 20 without passing through electromagnetic force generating member 30 (stator).

In addition, in the first embodiment, second magnetic body 240 is configured to be disposed so that boundary portion 223 (boundary surface, boundary) between first magnetic pole portion 221 and second magnetic pole portion 222 is straddled on upper surface 220b (the other surface) side of permanent magnet portion 220.

Specifically, a total of three second magnetic bodies 240 are configured to be disposed between a portion of a surface of permanent magnet portion 220 of a side opposite to a surface facing electromagnetic force generating member 30 and two adjacent magnetic pole portions. Accordingly, three second magnetic bodies 240 are positioned between first magnetic bodies 230 and 230 adjacent to each other when viewed from below by disposing second magnetic body 240 so as to straddle boundary portion 223 in each boundary portion 223 between first magnetic pole portion 221 and second magnetic pole portion 222. Furthermore, in the first embodiment, first magnetic body 230 and second magnetic body 240 are configured so as to overlap each other when viewed from below.

Three second magnetic bodies 240 are disposed so that upper surface 240a is exposed to upper surface 220b (the other surface) side of permanent magnet portion 220, respectively.

Furthermore, in the first embodiment, the plurality of second magnetic bodies 240 include second magnetic body 240 in which extended portion 241 extending toward lower surface 220a (one surface) side of permanent magnet portion 220.

Specifically, second magnetic body 240 disposed at the center has extending portion 241 extending toward lower surface 220a side of permanent magnet portion 220.

Furthermore, extended portion 241 extends along boundary portion 223 between first magnetic pole portion 221 on the inside and second magnetic pole portion 222 on the inside to lower surface 220a side of permanent magnet portion 220. In other words, tip surface 241a of extending portion 241 is exposed to lower surface 220a side of permanent magnet portion 220.

Accordingly, in the first embodiment, second magnetic body 240 is disposed on upper surface 220b (the other surface) side of permanent magnet portion 220 so as to straddle boundary portion 223 between first magnetic pole portion 221 and second magnetic pole portion 222. A portion where second magnetic body 240 is disposed (between two magnetic pole portions of permanent magnet portion 220 adjacent to each other and side opposite to surface facing electromagnetic force generating member 30) is a portion where magnetic saturation is likely to be generated. Therefore, the generation of magnetic saturation can be suppressed at the portion where magnetic saturation is likely to be generated by disposing second magnetic body 240 at the portion. As a result, the magnetic field generated by magnetic field generating member 20 can be further increased.

Furthermore, in the first embodiment, second magnetic body 240 positioned at the center of three second magnetic bodies 240, that is, second magnetic body 240 disposed between two permanent magnets 224 and 224 of permanent magnet portion 220 has extended portion 241 extending toward lower surface 220a side of permanent magnet portion 220.

By providing such an extended portion 241 to second magnetic body 240, since a magnetic path is formed between second magnetic body 240 and stator core 310 of electromagnetic force generating member (stator) 30, the magnetic resistance can be reduced. As a result, the magnetic field generated by magnetic field generating member 20 can be further increased.

Furthermore, in the first embodiment, extended portion 241 extends to lower surface 220a (one surface) side of permanent magnet portion 220. Therefore, the magnetic resistance can be further reduced by a magnetic path formed between second magnetic body 240 and stator core 310 of electromagnetic force generating member (stator) 30. Therefore, the magnetic field generated by magnetic field generating member 20 can be further increased.

First magnetic body 230 and second magnetic body 240 can be disposed on permanent magnet portion 220 by various methods.
For example, first magnetic body 230 and second magnetic body 240 can be disposed on permanent magnet portion 220 by fixing (fitting, bonding, or the like) each magnetic body to a recessed portion of permanent magnet portion 220 (permanent magnet 224) formed to have the recessed portion.

Furthermore, in the first embodiment, reinforcing member 250 is disposed on upper surface 220b (the other surface) side of permanent magnet portion 220. Reinforcing member 250 can be formed using, for example, a soft magnetic material, and has a substantially rectangular parallelepiped shape (including rectangular parallelepiped shape). Reinforcing member 250 is fixed in a state of abutting against upper surface 220b (the other surface) of permanent magnet portion 220.

Accordingly, the strength as magnetic field generating member 20 can be further improved by disposing reinforcing member 250 on upper surface (the other surface) 220b side of permanent magnet portion 220. As a result, linear motor 10 (motor) secured strength to be capable of withstanding practical use can be obtained.

In addition, if reinforcing member 250 is configured to have a soft magnetic portion formed of a soft magnetic material, the magnetic saturation generated on a side opposite to a surface facing electromagnetic force generating member (stator) 30 is suppressed in permanent magnet portion 220 of magnetic field generating member 20. Therefore, the magnetic field generated by magnetic field generating member 20 can be further increased.

Magnetic field generating member 20 is not limited to the configuration illustrated in FIG. 1 but can have various configurations.

Hereinafter, modification examples of magnetic field generating member 20 will be described. In addition, the modification examples to be described below are merely illustrative and the configuration of magnetic field generating member 20 is not limited to these configurations.

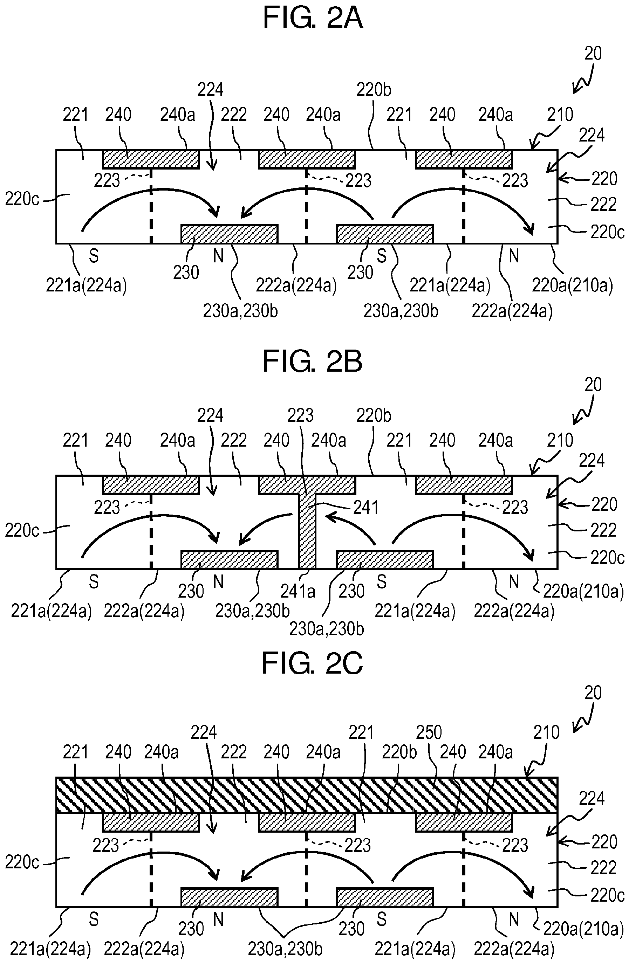

First, magnetic field generating member 20 can be configured as illustrated in FIG. 2A (first modification example). In magnetic field generating member 20 illustrated in FIG. 2A, main body portion 210 is configured by permanent magnet portion 220, two first magnetic bodies 230, and three second magnetic bodies 240.

Permanent magnet portion 220 has a magnetic pole surface on lower surface 220a (one surface) side and is configured so that a magnetic field is generated mainly in a direction normal to lower surface 220a.

Even in a configuration in FIG. 2A, permanent magnet portion 220 is described as one formed by two permanent magnets 224 and 224 subjected to the polar anisotropic magnetization so that a magnetic pole surface (N pole surface and S pole surface) having different polarities is formed on lower surface (one surface) 224a being arranged in parallel, as an example. In other words, permanent magnet portion 220 illustrated in FIG. 2A also has two (one or more) permanent magnets 224 subjected to the polar anisotropic magnetization.

Also in permanent magnet portion 220 illustrated in FIG. 2A, the S pole surface, the N pole surface, the S pole surface, and the N pole surface are alternately formed on lower surface 220a in this order from one side (left side in FIG. 2A) in one direction (length direction: left and right direction in FIG. 2A). In other word, permanent magnet portion 220 illustrated in FIG. 2A also includes two (at least one) first magnetic pole portion 221 of which lower surface 221a becomes an S pole surface (first magnetic pole surface) and two (at least one) second magnetic pole portion 222 which is adjacent to first magnetic pole portion 221 and of which lower surface 222a becomes an N pole surface (second magnetic pole surface). First magnetic pole portion 221, second magnetic pole portion 222, first magnetic pole portion 221, and second magnetic pole portion 222 are configured to be alternately disposed in this order from one side (left side in FIG. 2A) in a direction (length direction: left and right direction of FIG. 2A).

One first magnetic body 230 are configured to be disposed in the two magnetic pole portions on the inside (first magnetic pole portion 221 on inside and second magnetic pole portion 222 on inside), respectively.

Furthermore, in FIG. 2A, first magnetic body 230 is disposed in the respective magnetic pole portions in a state where lower surface 230a is exposed so as to be flush with the magnetic pole surfaces (lower surface 221a (the first magnetic pole surface) and lower surface 222a (the second magnetic pole surface)). In other words, also in FIG. 2A, a portion of the magnetic pole surfaces (lower surface 221a (first magnetic pole surface) and lower surface 222a (second magnetic pole surface)) of first magnetic pole portion 221 on the inside and second magnetic pole portion 222 on the inside constitute lower surface 230a (exposed surface 230b) of first magnetic body 230.

Three second magnetic bodies 240 are disposed so as to straddle boundary portion 223 between first magnetic pole portion 221 and second magnetic pole portion 222. Each of second magnetic bodies 240 is disposed so that upper surface 240a is exposed on upper surface 220b side of permanent magnet portion 220. In FIG. 2A, similarly to the pair of second magnetic bodies 240 positioned on the left and right, extended portion 241 extending toward lower surface 220a side of permanent magnet portion 220 is not formed also in second magnetic body 240 positioned at the center.

In addition, magnetic field generating member 20 may be configured as illustrated in FIG. 2B (modification example 2). Magnetic field generating member 20 illustrated in FIG. 2B has substantially the same configuration as permanent magnet portion 220 illustrated in FIG. 2A.

Magnetic field generating member 20 illustrated in FIG. 2B is different from permanent magnet portion 220 illustrated in FIG. 2A in that second magnetic body 240 positioned at the center has extended portion 241 extending toward lower surface 220a side of permanent magnet portion 220.

In addition, magnetic field generating member 20 can be configured as illustrated in FIG. 2C (modification example 3). Magnetic field generating member 20 illustrated in FIG. 2C also has substantially the same configuration as permanent magnet portion 220 illustrated in FIG. 2A.

Magnetic field generating member 20 illustrated in FIG. 2C is different from permanent magnet unit 220 illustrated in FIG. 2A in that reinforcing member 250 formed by using a soft magnetic material is disposed on upper surface 220b side of permanent magnet portion 220.

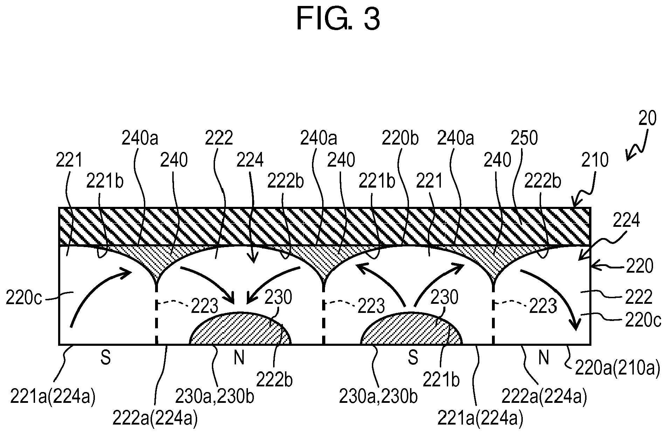

In addition, magnetic field generating member 20 may be configured as illustrated in FIG. 3 (fourth modification example). Magnetic field generating member 20 illustrated in FIG. 3 has substantially the same configuration as permanent magnet portion 220 illustrated in FIG. 2C.

In other words, also in magnetic field generating member 20 illustrated in FIG. 3, main body portion 210 is configured by permanent magnet portion 220 having one permanent magnet 224 subjected to the polar anisotropic magnetization, two first magnetic bodies 230, three second magnetic bodies 240, and reinforcing member 250 formed of soft magnetic material disposed on upper surface 220b side of permanent magnet portion 220.

Here, in magnetic field generating member 20 illustrated in FIG. 3, at least one of first magnetic pole portion 221 and second magnetic pole portion 222 of permanent magnet portion 220 has a curved surface (at least one of curved surface 221b and curved surface 222b) which is recessed into upper surface 220b side.

Specifically, permanent magnet portion 220 has lower surface 220a and upper surface 220b which have curved surface 221b protruding to the upper sides thereof in first magnetic pole portion 221 on the inside and lower surface 220a and upper surface 220b which have curved surface 222b protruding to the upper sides thereof in second magnetic pole portion 222 on the inside. In addition, permanent magnet portion 220 has upper surface 220b (the other surface) which has curved surface 221b protruding to the upper side and the inside (right side in FIG. 3) in first magnetic pole portion 221 on the outside and upper surface 220b which has curved surface 222b protruding to the upper side and the inside (left side in FIG. 3) in second magnetic pole portion 222 on the outside.

With the configuration, since the surface area of the portion where the magnetic flux of permanent magnet portion 220 is generated can be increased, the generating magnetic field can be further increased.

Even if magnetic field generating members 20 illustrated in FIG. 2A to FIG. 2C and FIG. 3 are applied to linear motor 10 illustrated in FIG. 1, linear motor 10 that can increase thrust and torque can be obtained.

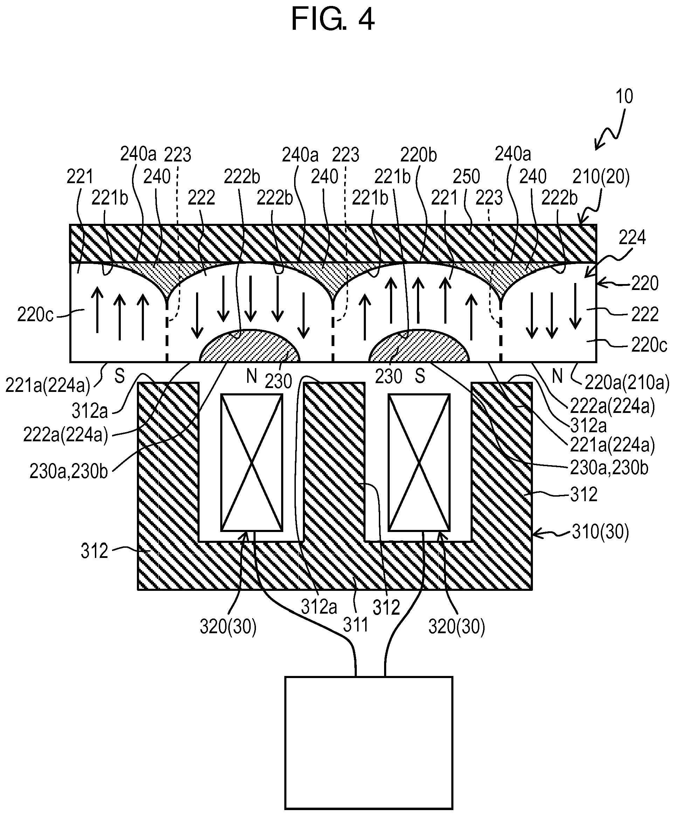

In addition, as illustrated in FIG. 4, configuration of linear motor 10 using magnetic field generating member 20 (fifth variation example) having permanent magnet 224 subjected to the isotropic magnetization as the mover is also possible.

Magnetic field generating member 20 illustrated in FIG. 4 has substantially the same configuration as permanent magnet portion 220 illustrated in FIG. 3.

In other words, also in magnetic field generating member 20 illustrated in FIG. 4, main body portion 210 is configured by permanent magnet portion 220, two first magnetic bodies 230, three second magnetic bodies 240, and reinforcing member 250 of a soft magnetic material disposed on upper surface 220b side of permanent magnet portion 220.

Here, in magnetic field generating member 20 illustrated in FIG. 4, as described above, permanent magnet portion 220 is different from permanent magnet portion 220 illustrated in FIG. 3 in that permanent magnet portion 220 has permanent magnet 224 subjected to the isotropic magnetization.

Specifically, permanent magnet portion 220 is formed by one permanent magnet 224 subjected to the isotropic magnetization to four poles so that the magnetic pole surfaces (N pole surface and S pole surface) having different polarities alternately appear on lower surface 224a (one surface). Accordingly, permanent magnet portion 220 illustrated in FIG. 4 has one (at least one) permanent magnets 224 subjected to the isotropic magnetization.

In addition, permanent magnet portion 220 illustrated in FIG. 4 also has two (at least one) first magnetic pole portions 221 of which lower surface 221a becomes the S pole surface (first magnetic pole surface) and two (at least one) second magnetic pole portions 222 which are adjacent to first magnetic pole portions 221 and of which lower surface 222a becomes the N pole surface (second magnetic pole surface). First magnetic pole portion 221, second magnetic pole portion 222, first magnetic pole portion 221, second magnetic pole portion 222 are configured to be alternately formed in this order from one side (left side in FIG. 4) in one direction (length direction: left and right direction in FIG 4).

Permanent magnet 224 illustrated in FIG. 4 does not have to be configured by one permanent magnet subjected to the magnetization to four poles and may be configured by two to four permanent magnets divided between adjacent magnetic poles, for example. In this case, effects such as simplification of the mold structure when forming a permanent magnet and simplification of the magnetization yoke when magnetization is performed are obtained.

In addition, also in permanent magnet portion 220 illustrated in FIG. 4, at least one of first magnetic pole portion 221 and second magnetic pole portion 222 of permanent magnet portion 220 has a curved surface (at least one of curved surface 221b and curved surface 222b) protruding to upper surface 220b (the other surface) side.

Specifically, permanent magnet portion 220 has lower surface 220a and upper surface 220b which have curved surface 221b protruding to the upper sides thereof in first magnetic pole portion 221 on the inside and lower surface 220a and upper surface 220b which have curved surface 222b protruding to the upper sides thereof in second magnetic pole portion 222 on the inside. In addition, permanent magnet portion 220 has upper surface 220b (the other surface) which has curved surface 221b protruding to the upper side and the inside (right side in FIG. 4) in first magnetic pole portion 221 on the outside and upper surface (the other surface) 220b which has curved surface 222b protruding to the upper side and the inside (left side in FIG. 4) in second magnetic pole portion 222 on the outside.

With such a configuration, the surface area of the portion where the magnetic flux of permanent magnet portion 220 is generated can be increased and the generating magnetic field can be further increased.

In addition, magnetic field generating member 20 having permanent magnet 224 subjected to the isotropic magnetization is also not limited to the configuration illustrated in FIG. 4 and various configurations are possible.

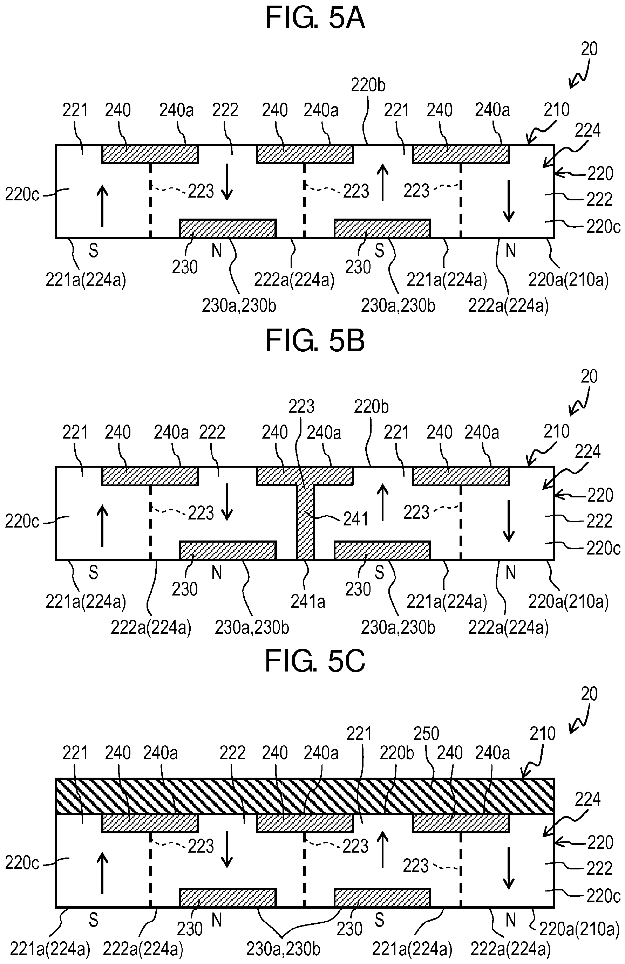

For example, magnetic field generating member 20 can be configured as illustrated in FIG. 5A (sixth variation example). Magnetic field generating member 20 illustrated in FIG. 5A has substantially the same configuration as permanent magnet portion 220 illustrated in FIG. 2A.

Magnetic field generating member 20 illustrated in FIG. 5A is different from permanent magnet portion 220 illustrated in FIG. 2A in that permanent magnet portion 220 is formed by permanent magnets 224 subjected to isotropic magnetization to the four poles so that the magnetic pole surfaces (N pole surface and S pole surface) having different polarities alternately appear on lower surface 224a.

In addition, magnetic field generating member 20 can be configured as illustrated in FIG. 5B (seventh modification example). Magnetic field generating member 20 illustrated in FIG. 5B has substantially the same configuration as permanent magnet unit 220 illustrated in FIG. 2B.

Magnetic field generating member 20 illustrated in FIG. 5B is different from permanent magnet portion 220 illustrated in FIG. 2B in that permanent magnet portion 220 is formed by permanent magnets 224 subjected to isotropic magnetization to the four poles so that the magnetic pole surfaces (N pole surface and S pole surface) having different polarities alternately appear on lower surface (one surface) 224a.

In addition, magnetic field generating member 20 can be configured as illustrated in FIG. 5C (eighth modification example). Magnetic field generating member 20 illustrated in FIG. 5C has substantially the same structure as permanent magnet portion 220 illustrated in FIG. 2C.

Magnetic field generating member 20 illustrated in FIG. 5C is different from permanent magnet portion 220 illustrated in FIG. 2C in that permanent magnet portion 220 is formed by permanent magnets 224 subjected to isotropic magnetization to the four poles so that the magnetic pole surfaces (N pole surface and S pole surface) having different polarities alternately appear on lower surface 224a (one surface).

Linear motor 10 that can increase the thrust and torque can be obtained even when magnetic field generating member 20 illustrated in FIGS. 5A to 5C, which is described above, is applied to linear motor 10 illustrated in FIG. 4.

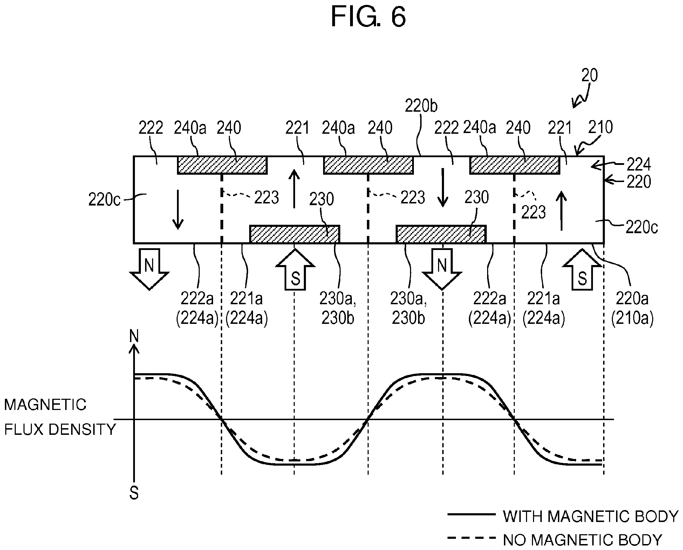

Accordingly, in magnetic field generating member 20 illustrated in the present embodiment and the modification examples thereof, first magnetic body 230 and second magnetic body 240 are disposed in permanent magnet portion 220. Accordingly, the magnetic flux density generated at the magnetic pole surfaces (lower surface 221a (first magnetic pole surface) and lower surface 222a (second magnetic pole surface)) of each magnetic pole portion (first magnetic pole portion 221 and second magnetic pole portion 222) can be increased (see FIG. 6) compared to the magnetic field generating member in which the magnetic body is not disposed.

Although FIG. 6 illustrates magnetic field generating member 20 having substantially the same configuration as that of magnetic field generating member 20 illustrated in FIG. 5A, even when another magnetic field generating member 20 is used, the same operations and effects can be obtained.

As described above, in the present embodiment and the modification examples thereof, magnetic field generating member 20 includes permanent magnet portion 220 having first magnetic pole portion 221 of which lower surface 220a (one surface) side becomes lower surface 221a (first magnetic pole surface, S pole surface) and second magnetic pole portion 222 which is adjacent to first magnetic pole portion 221 and of which lower surface 220a (one surface) side becomes lower surface 222a (second magnetic pole surface, N pole surface).

In addition, magnetic field generating member 20 has first magnetic body 230 disposed on the magnetic pole surface (at least one of lower surface 221a (first magnetic pole surface) and lower surface 222a (second magnetic pole surface)) side in one (at least one of first magnetic pole portion 221 and second magnetic pole portion 222) of at least one of first magnetic pole portion 221 and second magnetic pole portion 222. In addition, magnetic field generating member 20 includes second magnetic body 240 disposed on upper surface 220b side of permanent magnet portion 220 so as to straddle boundary portion 223 of first magnetic pole portion 221 and second magnetic pole portion 222.

With such a configuration, since the saturation magnetic flux density at the magnetic pole portion (at least one of first magnetic pole portion 221 and second magnetic pole portion 222) can be improved by first magnetic body 230, the generating magnetic field can be increased. Furthermore, the saturation magnetic flux density at portions where the generating magnetic flux tends to be limited by magnetic saturation can be increased by second magnetic body 240 which is disposed at these portions and the generating magnetic field can be further increased.

In addition, since magnetic field generating member 20 can be formed with a small number of components as compared with the permanent magnet of the Halbach array structure, the configuration thereof can be simplified.

Accordingly, according to the present embodiment and the modification examples thereof, magnetic field generating member 20 having a more simplified configuration and increasing the generating magnetic field and linear motor 10 (motor) including magnetic field generating member 20 can be obtained.

Here, although the magnetic flux tends to flow in a semicircular shape on a side opposite to the generating magnetic field side (upper surface 220b side of permanent magnet portion 220) of magnetic field generating member 20, from the viewpoint of size, cost, and the like, in a case where the thickness of magnetic field generating member 20 in a direction of the generating magnetic field is decreased, there is a tendency that the semicircular flow becomes distorted, the magnetic flux is concentrated, and the generating magnetic flux is limited by magnetic saturation. In other words, it is difficult to achieve compatibility between increasing the generating magnetic field and reducing the thickness of the magnetic field generating member in the magnetic field generating member of the related art.

However, if second magnetic body 240 is disposed on a side opposite to the generating magnetic field side (upper surface 220b side of permanent magnet portion 220) as in the present embodiment and the modification examples thereof, even if the thickness of magnetic field generating member 20 in the direction of the generating magnetic field is reduced, the generation of magnetic saturation can be suppressed by second magnetic body 240.

Accordingly, according to the embodiment and the modification examples thereof, it is possible to increase the generating magnetic field and to reduce the thickness of magnetic field generating member 20.

In addition, the plurality of magnetic pole portions (at least one of first magnetic pole portion 221 and second magnetic pole portion 222) in which first magnetic body 230 id disposed may be configured so that at least a portion of the magnetic pole surface (at least one of lower surface 221a (first magnetic pole surface) and lower surface 222a (second magnetic pole surface) includes the magnetic pole portion (at least one of first magnetic pole portion 221 and second magnetic pole portion 222) serving as exposed surface 230b form which first magnetic body 230 is exposed.

Accordingly, if at least a portion of first magnetic body 230 is exposed to lower surface 220a (one surface) side of permanent magnet portion 220, the saturation magnetic flux density in the magnetic pole portion (at least one of first magnetic pole portion 221 and second magnetic pole portion 222) can be further improved and the generating magnetic field can be further increased.

In addition, permanent magnet portion 220 may be configured to have permanent magnet 224 subjected the polar anisotropic magnetization.

Accordingly, it is possible to obtain a further optimal magnetization as permanent magnet 224, and the generating magnetic flux of magnetic field generating member 20 can be further increased. Furthermore, since number of permanent magnets 224 constituting permanent magnet portion 220 can be made smaller than that of the permanent magnets of the Halbach array structure, it is possible to improve the productivity and to improve the dimensional accuracy.

In addition, permanent magnet portion 220 may have permanent magnets 224 subjected to isotropic magnetization in a direction facing lower surface 220a (one surface) and upper surface 220b (the other surface).

Accordingly, permanent magnet 224 isotropic magnetized can be manufactured relatively easily. For example, although rare-earth sintered magnet is generally difficult to perform polar-anisotropic magnetization, even in such rare-earth sintered magnet, it is relatively easy to perform the isotropic magnetization. Therefore, magnetic field generating member 20 that increases the generating magnetic field can be more easily manufactured. In other words, even if permanent magnets 224 which can be manufactured relatively easily can be used, the generating magnetic field can be increased. Furthermore, since the number of permanent magnets 224 constituting permanent magnet portion 220 can be made smaller than that of the permanent magnets of the Halbach array structure, it is possible to improve the productivity and to improve the dimensional accuracy.

In addition, permanent magnet portion 220 may be configured by one permanent magnet 224.

Accordingly, since there is no need to bond multiple permanent magnets, productivity can be further improved. In addition, since errors caused by bonding a plurality of permanent magnets can be eliminated, the dimensional accuracy can be further improved.

In addition, reinforcing member 250 may be disposed on upper surface 220b (the other surface) side of permanent magnet portion 220.

Accordingly, the strength as magnetic field generating member 20 can be further improved.

In addition, reinforcing member 250 may have a soft magnetic portion formed of a soft magnetic material.

Accordingly, the magnetic saturation on upper surface 220b side of permanent magnet portion 220 of magnetic field generating member 20 can be further relaxed, and the generating magnetic field can be further increased.

In addition, the plurality of second magnetic bodies 240 may include second magnetic body 240 on which extended portion 241 extending toward lower surface 220a of permanent magnet portion 220 is formed.

Accordingly, since a magnetic path is formed between second magnetic body 240 on which extended portion 241 is formed and lower surface 220a side of permanent magnet portion 220, the magnetic resistance can be reduced. As a result, the generating magnetic field can be further increased.

In addition, extending portion 241 may extend to lower surface 220a side of permanent magnet portion 220.

Accordingly, since the magnetic resistance can be further reduced by the magnetic path formed between second magnetic body 240 and lower surface 220a side of permanent magnet portion 220, the generating magnetic field can be further increased.

In addition, at least one magnetic pole portion (at least one of first magnetic pole portion 221 and second magnetic pole portion 222) of permanent magnet portions 220 may have a curved surface (at least one of curved surface 221b and curved surface 222b protruding to upper surface 220b side.

Accordingly, since the surface area of the portion where the magnetic flux of permanent magnet portion 220 is generated can be increased, the generating magnetic field can be further increased.

In addition, permanent magnet portion 220 may have a configuration in which the end portion in a direction in which first magnetic pole portion 221 and second magnetic pole portion 222 are arranged in parallel becomes terminal end portion 220c. First magnetic body 230 disposed at terminal end portion 220c may be configured so as not to be exposed to lower surface 220a.

Accordingly, since the leakage magnetic flux at terminal end portion 220c of permanent magnet portion 220 of magnetic field generating member 20 can be reduced, the generating magnetic field can be further increased.

In addition, linear motor 10 according to the present embodiment and modification examples thereof includes magnetic field generating member 20 and electromagnetic force generating member 30 which has coil 320 for generating a magnetic field by energization and is disposed to face each other with a gap therebetween on lower surface 220a side of permanent magnet portion 220 of magnetic field generating member 20.

One of magnetic field generating member 20 and electromagnetic force generating member 30 is used as a mover and the other member is used as a stator.

Accordingly, the thrust and torque of linear motor 10 can be increased.

As described above, although the preferred embodiments of the disclosure are described above, the disclosure is not limited to the embodiments, and various modifications are possible.

For example, the magnetic field generating member can be formed by appropriately combining the configurations illustrated in the first embodiment and the modification examples thereof.

In addition, in the first embodiment and the modification example thereof, although the permanent magnet portion having two first magnetic pole portions and two second magnetic pole portions is described as an example, the permanent magnet portion may be have at least one of the first magnetic pole portion and at least one of the second magnetic pole portion and the number of the first magnetic pole portion and the second magnetic pole portion are not limited to two. In addition, the number of permanent magnets constituting the permanent magnet portion is also not limited to one or two.

In addition, in the first embodiment, although a case where the first magnetic body is disposed in all of the magnetic pole portions (two first magnetic pole portions and two second magnetic pole portions) is described as an example, the first magnetic body may be disposed on at least one magnetic pole portion.

In addition, in the first embodiment and the modification examples thereof, although the motor is described in which the magnetic field generating member used as a mover and the electromagnetic force generating member used as a stator, it is possible to be a motor in which the magnetic field generating member is used as a stator and the electromagnetic force generating member is used as a mover.

In addition, in the first embodiment and the modification examples thereof, the electromagnetic force generating member having the stator core and the coil wound around the stator core and generating a magnetic field by energization is described as an example, an electromagnetic force generating member without using the stator core can be also formed.

In addition, in the first embodiment and the modification examples thereof, as an example, although a linear motor using a linear magnetic field generating member is used as a motor, the motor is not limited to the linear motor. For example, the motor can be a swinging motor using a semicircular arc-shaped magnetic field generating member, or a rotating motor using an annular magnetic field generating member.

In addition, specification (shape, size, layout, or the like) of at least one of permanent magnets and electromagnetic force generating members and other details can be changed as appropriate.

As described above, since the magnetic field generating member and the motor in the disclosure can increase the generating magnetic flux of the magnetic field generating member and increase the thrust and torque of the motor, the magnetic field generating member and the motor can be useful for a device which is required to have a small size and high performance such as home electric appliances such as electric shavers and electric toothbrushes, as well as industrial robots.

## Claims

1. A magnetic field generating member comprising:
a permanent magnet portion that has a first magnetic pole portion of which one surface side becomes a first magnetic pole surface and a second magnetic pole portion which is adjacent to the first magnetic pole portion and of which the one surface side becomes a second magnetic pole surface;
a first magnetic body disposed on the one surface side in at least one of the first magnetic pole portion and the second magnetic pole portion; and
a second magnetic body disposed on the other surface side of the permanent magnet portion so as to straddle boundary between the first magnetic pole portion and the second magnetic pole portion.

2. The magnetic field generating member of Claim 1,
wherein an exposed surface from which the first magnetic body is exposed is formed on at least a portion of the one surface side of the magnetic pole portion on which the first magnetic body is disposed.

3. The magnetic field generating member of Claim 1 or 2,
wherein the permanent magnet portion has a permanent magnet subjected to polar anisotropic magnetization.

4. The magnetic field generating member of any one of Claims 1 to 3,
wherein the permanent magnet portion has a permanent magnet subjected to isotropic magnetization in a direction facing the one surface and the other surface.

5. The magnetic field generating member of any one of Claims 1 to 4,
wherein the permanent magnet portion is configured by one permanent magnet.

6. The magnetic field generating member of any one of Claims 1 to 5,
wherein a reinforcing member is disposed on the other surface side of the permanent magnet portion.

7. The magnetic field generating member of Claim 6,
wherein the reinforcing member has a soft magnetic portion formed of a soft magnetic material.

8. The magnetic field generating member of any one of Claims 1 to 7,
wherein the second magnetic body comprises a plurality of second magnetic bodies, and
wherein the plurality of second magnetic bodies include the second magnetic body on which an extended portion extending toward the one surface side is formed.

9. The magnetic field generating member of Claim 8,
wherein the extended portion is configured to extend to one surface side.

10. The magnetic field generating member of any one of Claims 1 to 9,
wherein at least one magnetic pole portion in the permanent magnet portion has a surface curved toward the other surface side.

11. The magnetic field generating member of any one of Claims 1 to 10,
wherein a terminal end portion is formed on an end portion of the permanent magnet portion in a direction in which the first magnetic pole portion and the second magnetic pole portion are arranged in parallel, and
wherein the first magnetic body disposed on the terminal end portion is not exposed to the one surface side.

12. A motor comprising:
the magnetic field generating member described in any one of Claims 1 to 11; and
an electromagnetic force generating member that has a coil for generating a magnetic field by energization and is disposed on the one surface side of the magnetic field generating member to face the magnetic field generating member with a gap between the electromagnetic force generating member and the magnetic field generating member,
wherein one of the magnetic field generating member and the electromagnetic force generating member is used as a mover and the other one of the magnetic field generating member and the electromagnetic force generating member is used as a stator.
